# EUROPEAN PATENT SPECIFICATION

(11) **EP 2 900 034 B1**
(45) Date of publication and mention of the grant of the patent: **17.05.2017**
(21) Application number: 14305088.8
(22) Date of filing: 22.01.2014
(51) Int. Cl.: H04W 88/10

(54) **Device for processing signals of a communication standard to produce signals of another communication standard for a radio equipment**
Vorrichtung zur Verarbeitung von Signalen eines Kommunikationsstandards zur Herstellung eines anderen Kommunikationsstandards für ein Funkgerät
Dispositif de traitement de signaux dans une norme de communication pour produire des signaux d'une autre norme de communication pour un équipement radio

(43) Date of publication of application: 29.07.2015
(73) Proprietor: ALCATEL LUCENT, 92100 Boulogne-Billancourt (FR)
(72) Inventor: Pierrard, Arnaud, 91620 Nozay (FR); Klein, Olivier, 91620 Nozay (FR); Froger, Emmanuel, 91620 Nozay (FR)
(74) Representative: Berthier, Karine

(56) References cited:
- WO-A1-00/51376
- US-A1- 2006 223 468
- US-B1- 7 133 375

## Description

### Field of the Invention

The present invention relates to communications between radio equipments and a core network of a wireless communication network. Background

A wireless communication equipment can be seen as an equipment capable of generating baseband signals defined by at least one communication standard, and therefore having a predefined carrier bandwidth and a predefined sampling rate, and of transmitting these baseband signals to radio equipment(s) adapted to this communication standard and belonging to a wireless communication network.

Due to technology evolutions, it is more and more frequent that wireless communication equipments implementing different communication standards and belonging to clients of a wireless communication network operator coexist in the same area. For instance, WCDMA, GSM, WiMax and LTE may be used by different clients in the same area. In this case, in order the wireless communication network may satisfy every client of its operator, it may comprise radio equipments adapted respectively to the different communication standards used by these clients and connected to core networks adapted to their own communication standard, which introduces a lot of redundancy, is expensive and cumbersome, and consumes a lot of energy. In a variant, the wireless communication network may comprise multi standard radio equipments having communication modules adapted respectively to the different communication standards and connected respectively to a core network adapted to their own communication standard, which introduces complexity and control redundancy. A multi-standard wireless base station according to the prior art is described eg. in document US 2006/0223468 A1.

Moreover, each time a new communication standard is introduced, the control module of a radio equipment is not capable of processing signals transmitted by wireless communication equipments adapted to older communication standards.

### Summary

So an object of this invention is to improve the situation by allowing radio equipments to transmit signals, whatever their initial communication standard, to a core network adapted to a chosen communication standard.

In a first embodiment, a radio equipment is provided according to claim 1.

The radio equipment may include additional characteristics considered separately or combined, and notably:
- it may comprise a processing means arranged for modifying the sampling rate of a received signal by multiplying it by a predefined factor depending on at least its sampling rate, the chosen sampling rate and the chosen carrier bandwidth;
- the processing means may be further arranged for filtering some chosen received signals to modify their pulse shape;
- the processing means may be arranged, when the radio equipment has received Nj signals having the same carrier bandwidth and sampling rate, with Nj ≥ 2, for modifying the sampling rate of each received signal by multiplying it by the predefined factor which further depends on Nj;
- it may comprise a frequency offset means, arranged for offsetting respective frequencies of the Nj signals with modified sampling rate one from the other to distribute them into the chosen carrier bandwidth, and a combining means, arranged for combining these Nj signals with modified sampling rate and frequency offset to deliver a combined signal, having the chosen carrier bandwidth and chosen sampling rate, to be transmitted to the core network;
- the frequency offset means may comprise Nj digital signal generators, each arranged for offsetting the frequencies of one of the Nj signals with modified sampling rate;
- the processing means may comprise Nj resampling modules, each arranged for modifying the sampling rate of one of the Nj received signals by multiplying it by the predefined factor. In a variant, the processing means may comprise i) Nj first resampling modules each arranged for modifying the sampling rate of one of the Nj received signals by multiplying it by a first predefined sub factor that defines the predefined factor in combination with a second predefined sub factor, and ii) Nj second resampling modules each arranged for modifying the sampling rate of one of the Nj received signals, filtered and having a sampling rate modified by a corresponding first resampling modules, by multiplying it by this second predefined sub factor;
- it may be arranged for processing signals to be exchanged between wireless communication equipments, implementing a communication standard that is chosen from a group comprising at least GSM, WCDMA and WiMax, and a core network adapted to a chosen communication standard that is LTE.

### Brief Description of the Figures

Some embodiments of device and radio equipments in accordance with embodiments of the present invention are now described, by way of example only, and with reference to the accompanying drawings, in which :
- The Figure 1 schematically and functionally illustrates a wireless communication network comprising a core network coupled to radio equipments equipped with processing devices according to the invention,
- The Figure 2 schematically and functionally illustrates an example of radio equipment equipped with examples of embodiment of processing devices according to the invention,
- The Figure 3 schematically illustrates in a diagram amplitudes (in dBFs) of four GSM baseband signals, transformed into a 10 MHz LTE baseband signals, plotted as a function of the frequency (in MHz), and
- The Figure 4 schematically illustrates in a diagram amplitudes (in dBFs) of two WCDMA baseband signals, transformed into a 10 MHz LTE baseband signals, plotted as a function of the frequency (in MHz).

### Description of Embodiments

Hereafter is disclosed a device 1ⱼ intended for processing signals received by a radio equipment 2 and to be exchanged between a core network 6 adapted to a chosen communication standard and wireless communication equipments 3ₖ implementing at least one communication standard.

In the following description it will be considered that the wireless communication equipments 3ₖ are smartphones. But this is not limited to this kind of wireless communication equipment. Indeed, it concerns any type of wireless communication equipment capable of establishing communications with other wireless communication equipments or network equipments via at least one communication network, and notably tablets, for instance.

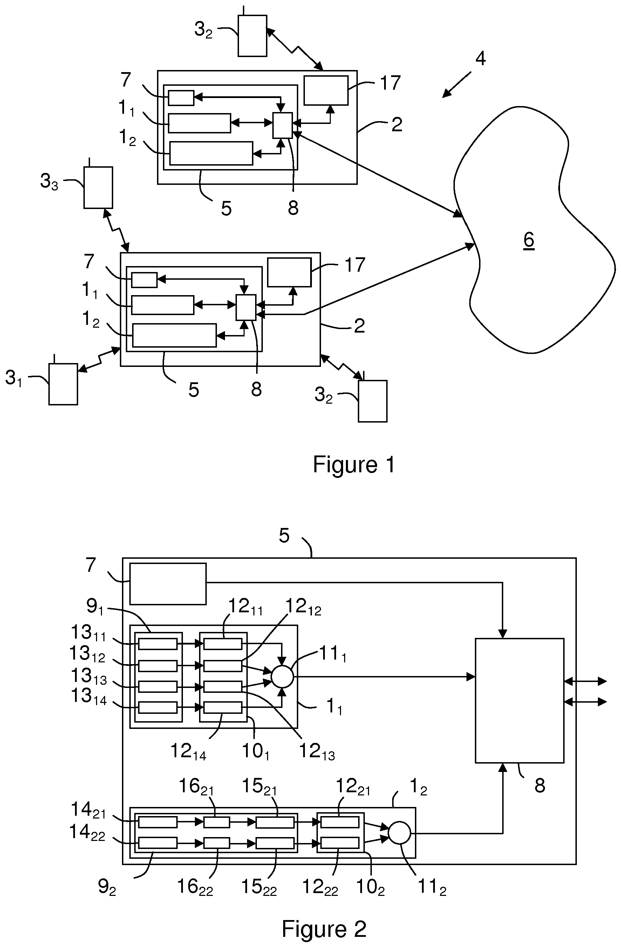

A wireless communication network 4, to which wireless communication equipments 3ₖ may be connected, is schematically illustrated in Figure 1. This communication network 4 comprises a wireless communication infrastructure, comprising radio equipments 2 (sometime named "base stations") allowing connection of wireless communication equipments 3ₖ of clients (or subscribers or users) and coupled to a core network 6 connected to the wireless communication infrastructure.

As illustrated, each radio equipment 2 comprises at least a radio module 17 and a control module 5.

The radio module 17 is arranged for exchanging data with wireless communication equipments 3ₖ. So, it is arranged for modulating data at desired frequency.

The control module 5 is the digital part of the radio equipment (or base station) 2. It comprises at least one (processing) device 1ⱼ that is arranged for processing signals BSⱼ, received by the radio module 17 from wireless communication equipments 3ₖ implementing a communication standard CSⱼ different from a chosen communication standard CCS, in order to be capable of transmitting them to the core network 6 that is adapted to this chosen communication standard CCS.

A signal BSⱼ has a carrier bandwidth CBⱼ and a sampling rate SRⱼ that are defined by a communication standard CSⱼ.

In the following description it will be considered as an example that the chosen communication standard CCS is LTE ("Long Term Evolution" - 4G). But the chosen communication standard CCS could be any other communication standard known from the man skilled in the art or that will be defined in the future.

Moreover, in the following description it will be considered as an example that each radio equipment 2 comprises first 1, (j = 1) and second 1₂ (j = 2) processing device adapted respectively to first CS₁ and second CS₂ communication standards. But a radio equipment 2 may comprise a number of processing devices 1ⱼ that is equal to one or greater than two.

It is important to note that the modem 7 and the (processing) device(s) 1ⱼ could be sub parts of a same main modem.

More, in the following description it will be considered as an example that the first communication standard CS₁ is GSM (2G), and the second communication standard CS₂ is WCDMA (3G). But each communication standard CSⱼ may be different from GSM or WCDMA as soon as it is different from the chosen communication standard CCS. For instance, a communication standard CSⱼ may be WiMax or EDGE.

Still more, in the following description a first wireless communication equipment 3₁ (k = 1) implements the first communication standard CS₁, a second wireless communication equipment 3₂ (k = 2) implements the second communication standard CS₂, and a third wireless communication equipment 3₃ (k = 3) implements the chosen communication standard CCS.

It is important to note, as illustrated in Figure 1, that the control module 5 of each radio equipment 2 also comprises a modem 7, that is intended for processing signals BS', to be exchanged between the core network 6 and a third wireless communication equipment 3₃, and defined by the chosen communication standard CCS.

Moreover, each radio equipment 2 may also comprise a switching module 8. This switching module (or core module) 8 is coupled to the modem 7 and to each (processing) device 1ⱼ, but also to the core network 6 and to the radio module 17 (via a CPRI interface). It is intended for transmitting signals delivered by the modem 7 and each (processing) device 1ⱼ either to the core network 6 or to the radio module 17 and for switching signals originating from the core network 6 towards the concerned modem 7 or (processing) device 1ⱼ.

A signal BS' has a chosen carrier bandwidth CB' and a chosen sampling rate SR' that are defined by the chosen communication standard CCS.

Each (processing) device 1ⱼ is arranged, when it receives a signal BSⱼ (previously received by its radio equipment 2), for modifying at least the carrier bandwidth CBⱼ and the sampling rate SRⱼ of this received signal BSⱼ respectively into the chosen carrier bandwidth CB' and the chosen sampling rate SR', to produce a modified signal MBS to be transmitted either to the core network 6 that is adapted to the chosen communication standard CCS or to at least one wireless communication equipment 3ₖ.

So each (processing) device 1ⱼ allows its radio equipment 2 to transmit signals, corresponding to a chosen communication standard CCS while they were initially corresponding to a communication standard CSj, to the core network 6 that is adapted to this chosen communication standard CCS or to at least one wireless communication equipment 3ₖ. So a radio equipment 2 comprising one or more devices 1ⱼ is now capable to transmit signals, whatever their initial communication standard CSj, either to a core network 6 adapted to a chosen communication standard CCS or to at least one wireless communication equipment 3ₖ.

In the non-limiting example illustrated in figures 1 and 2, each device 1ⱼ also acts as a modem (i.e. a modulator/demodulator). But in a variant each device 1ⱼ could be either a part of a modem adapted to the communication standard CSⱼ it is associated to, or associated to a modem adapted to the communication standard CSⱼ it is associated to.

Preferably, and as illustrated in Figure 2, each device 1ⱼ may comprise a processing means 9ⱼ arranged for modifying the sampling rate SRⱼ of a received signal BSⱼ by multiplying it (SRⱼ) by a predefined factor PFⱼ that depends on at least its sampling rate SRⱼ, the chosen sampling rate SR' and the chosen carrier bandwidth CB'.

For some (chosen) communication standard CSⱼ, such as WCDMA for instance, the processing means 9ⱼ may be further arranged for filtering the corresponding (chosen) received signals BSⱼ in order to modify their pulse shape. Such a filtering may be, for instance, performed by a root raised cosine filter 16ⱼₙ (with n = 1 to Nj), as disclosed by the standard.

As illustrated in Figure 2, a device 1ⱼ may be arranged in order to process in parallel Nj received signals BSⱼ, originating from Nj different wireless communication equipments 3ₖ, with k = j and Nj ≥ 2, and then to combine these processed signals to deliver a combined signal to be transmitted to the the core network 6.

For this purpose the processing means 9ⱼ of such a device 1ⱼ may be arranged for modifying the sampling rate SRⱼ of each received signal BSⱼ (corresponding to the same communication standard CSⱼ) by multiplying it (SRⱼ) by the predefined factor PFⱼ. So, in this case the predefined factor PFⱼ depends at least on the sampling rate SRⱼ, the chosen sampling rate SR' and the chosen carrier bandwidth CB'. In some cases this predefined factor PFⱼ may also depend on Nj.

As illustrated in Figure 2, in order the received signal BSⱼ is frequency separated before being combined, the device 1ⱼ may comprise a frequency offset means 10ⱼ and a combining means 11ⱼ. The frequency offset means 10ⱼ is arranged for offsetting the respective frequencies of the Nj signals, whose sampling rate SRⱼ has been modified, one from the other, in order to distribute them into the chosen carrier bandwidth CB'. The combining means 11ⱼ is arranged for combining the Nj signals with modified sampling rate and frequency offset in order to deliver a combined signal CBS, having the chosen carrier bandwidth CB' and the chosen sampling rate SR', which must be transmitted to the the core network 6 via the switching module 8. This combining means 11ⱼ may be a summer arranged for adding the signals it receives onto its inputs.

For instance, and as illustrated in Figure 2, the frequency offset means 10ⱼ may comprise Nj digital signal generators 12ⱼₙ that are each arranged for offsetting the frequencies of one of the Nj signals with a modified sampling rate and originating from Nj different wireless communication equipments 3ₖ (with k = j). In the non-limiting example illustrated in figure 2, N1 (j = 1) is equal to four and N2 (j = 2) is equal to two. Therefore, the frequency offset means 10₁ of the first device 1₁ comprises four digital signal generators 12₁₁ to 12₁₄ (n = 1 to 4), and the frequency offset means 10₂ of the second device 1₂ comprises two digital signal generators 12₂₁ to 12₂₂ (n = 1 and 2).

It is important to note that the number Nj of signals BSⱼ that a device 1ⱼ is capable of processing may vary from one radio equipment 2 to another one.

For instance, each digital signal generator 12ⱼₙ may typically be a numerically controlled oscillator (or NCO).

As illustrated in Figure 2, to process in parallel Nj received signals BSⱼ, originating from Nj different wireless communication equipments 3ₖ (with k = j), a processing means 9ⱼ may comprise Nj resampling modules 13ⱼₙ that are each arranged for modifying the sampling rate SRⱼ of one of these Nj received signals BSⱼ by multiplying it by the predefined factor PFⱼ. This is the case of the first device 1₁ illustrated in Figure 2 and adapted to process GSM signals BS₁.

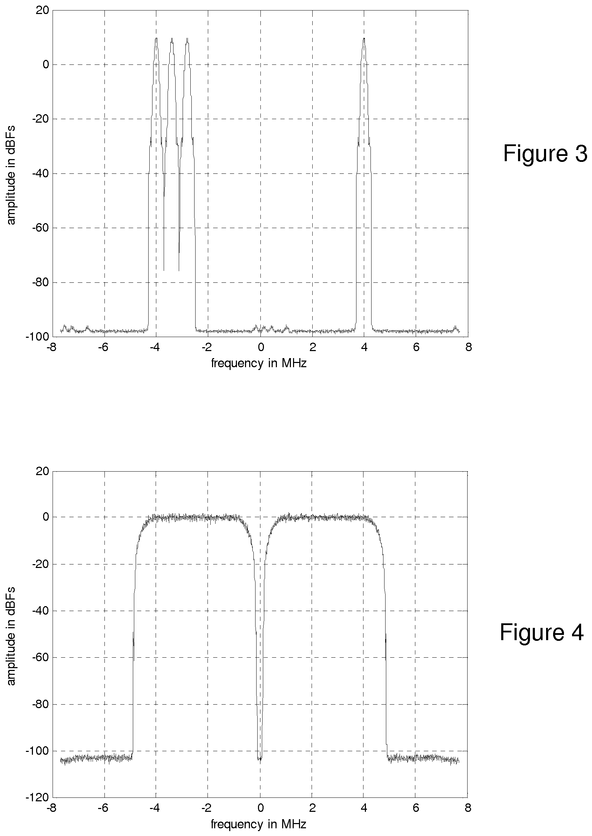

In this example the four received GSM signals BS₁ have an initial sampling rate SR₁ that is equal to 270.833/15.36 KSps ("Kilo Samples per second") and upsampled by a predefined factor PF₁ equal to 18432/325 (BS' = 10 MHz (for instance)) into the resampling modules 13₁ₙ to reach 15.36 MSps (which is the chosen sampling rate SR' of a LTE signal BS'). Then, each resampled signal is frequency shifted, for instance, of -4 MHz, - 3.2 MHz, -2.6 MHz or +4 MHz by a corresponding frequency offset means 12₁ₙ to be distributed in a chosen LTE carrier bandwidth CB' equal to 10 MHz (for instance). Finally the four resampled and frequency shifted signals are combined into the combining means 11₁ to produce a combined signal CBS that is transmitted to the switching module 8. The result of this process of four GSM signals BS₁ is illustrated in the diagram of Figure 3. The digital combined signal CBS to be transmitted to the switching module 8 is sampled at the chosen sampling rate SR' of a LTE 10 MHz signal BS', but the Power Spectral Density (amplitude) is the one of four adjacent GSM signals BS₁.

In a variant also illustrated in Figure 2, to process in parallel Nj received signals BSj, originating from Nj different wireless communication equipments 3ₖ (with k = j), a processing means 9ⱼ may comprise Nj first resampling modules 14ⱼₙ and Nj second resampling modules 15ⱼₙ. Each first resampling module 14ⱼₙ is arranged for modifying the sampling rate SRⱼ of one of the Nj received signals BSⱼ by multiplying it (SRⱼ) by a first predefined sub factor SF1ⱼ that defines the predefined factor PFⱼ in combination with a second predefined sub factor SF2ⱼ. For instance, PFⱼ = SF1ⱼ * SF2ⱼ. Each second resampling module 15ⱼₙ is arranged for modifying the sampling rate of one of the Nj signals, which have been filtered and whose sampling rate has been modified by a corresponding first resampling module 14ⱼₙ, by multiplying it by the second predefined sub factor SF2ⱼ. This is the case of the second device 1₂ illustrated in Figure 2 and adapted to process WCDMA signals BS₂.

It is important to note that this splitting of the resampling in two modules 14ⱼₙ and 15ⱼₙ is adapted to the case where the processing means 9ⱼ must perform a filtering by means of a filter 16ⱼₙ just after the first resampling part. So, the output of a first resampling modules 14ⱼₙ feeds the input of a corresponding filter 16ⱼₙ, and the output of this filter 16ⱼₙ feeds the input of a corresponding second resampling module 15ⱼₙ.

In this example the two WCDMA signals BS₂ have an initial sampling rate SR₂ that is equal to 3.84/7.68 MSps ("Mega Samples per second") and upsampled by a first sub factor SF1₂ equal to 2 into the first resampling modules 14₂ₙ to reach 7.68 MSps. Then each resulting signal is pulse shaped with a filter 16₂ₙ, and each filtered signal is upsampled by a second sub factor SF2₂ equal to 2 into a corresponding second resampling module 15₂ₙ to reach 15.36 MSps (which is the chosen sampling rate SR' of a LTE signal BS'). Then, each filtered and resampled signal is frequency shifted, for instance, of -2.5 MHz or +2.5 MHz by a corresponding frequency offset means 12₂ₙ to be distributed in a chosen LTE carrier bandwidth CB' equal to 10 MHz (for instance). Finally the two filtered, resampled and frequency shifted signals are combined into the combining means 11₂ to produce a combined signal CBS that is transmitted to the switching module 8. The result of this process of two WCDMA signals BS₂ is illustrated in the diagram of Figure 4. The digital combined signal CBS to be transmitted to the switching module 8 is sampled at the chosen sampling rate SR' of a LTE 10 MHz signal BS', but the Power Spectral Density (amplitude) is the one of two adjacent WCDMA signals BS₂.

The functions of the various elements shown in the figures, including any functional blocks labeled as "means" or "module", may be provided through the use of dedicated hardware as well as hardware capable of executing software in association with appropriate software.

It should be appreciated by those skilled in the art that any block diagrams herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its scope, which is defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Radio equipment (2) arranged for receiving signals from wireless communication equipments (3ₖ) implementing different communication standards and from a core network (6) implementing a chosen communication standard, wherein it comprises at least a radio module (17) and a control module (5), said control module comprising at least one device (1ⱼ) for processing signals received by said radio equipment (2) and to be exchanged between said core network (6) and said wireless communication equipments (3ₖ), said device (1ⱼ) being arranged, when it receives a signal having a carrier bandwidth and a sampling rate differing respectively from a chosen carrier bandwidth and a chosen sampling rate of said chosen communication standard, for modifying at least said carrier bandwidth and said sampling rate of said received signal respectively into said chosen carrier bandwidth and said chosen sampling rate, to produce a modified signal to be transmitted either to said core network (6) or to at least one wireless communication equipment (3ₖ).

2. Radio equipment according to claim 1, wherein said device comprises a processing means (9ⱼ) arranged for modifying said sampling rate of a received signal by multiplying it by a predefined factor depending on at least its sampling rate, said chosen sampling rate and said chosen carrier bandwidth.

3. Radio equipment according to claim 2, wherein said processing means (9ⱼ) is further arranged for filtering some chosen received signals to modify their pulse shape.

4. Radio equipment according to one of claims 2 and 3, wherein said processing means (9ⱼ) is arranged, when said radio equipment (2) has received Nj signals having the same carrier bandwidth and sampling rate, with Nj ≥ 2, for modifying said sampling rate of each received signal by multiplying it by said predefined factor, which further depends on Nj.

5. Radio equipment according to claim 4, wherein said device comprises i) a frequency offset means (10ⱼ) arranged for offsetting respective frequencies of said Nj signals with modified sampling rate one from the other, to distribute them into said chosen carrier bandwidth, and ii) a combining means (11ⱼ) arranged for combining said Nj signals with modified sampling rate and frequency offset to deliver a combined signal, having said chosen carrier bandwidth and said chosen sampling rate, to be transmitted to said core network (6).

6. Radio equipment according to claim 5, wherein said frequency offset means (10ⱼ) comprises Nj digital signal generators (12ⱼₙ), each arranged for offsetting said frequencies of one of said Nj signals with modified sampling rate.

7. Radio equipment according to one of claims 4 to 6, wherein said processing means (9ⱼ) comprises Nj resampling modules (13ⱼₙ), each arranged for modifying said sampling rate of one of said Nj received signals by multiplying it by said predefined factor.

8. Radio equipment according to one of claims 4 to 6 in combination with claim 3, wherein said processing means (9ⱼ) comprises i) Nj first resampling modules (14ⱼₙ) each arranged for modifying said sampling rate of one of said Nj received signals by multiplying it by a first predefined sub factor that defines said predefined factor in combination with a second predefined sub factor, and ii) Nj second resampling modules (15ⱼₙ) each arranged for modifying said sampling rate of one of said Nj received signals, filtered and having a sampling rate modified by a corresponding first resampling module (14ⱼₙ), by multiplying it by said second predefined sub factor.

9. Radio equipment according to one of claims 1 to 8, wherein said device is arranged for processing signals to be exchanged between wireless communication equipments (3ₖ), implementing a communication standard chosen from a group comprising at least GSM, WCDMA and WiMax, and a core network (6) adapted to a chosen communication standard that is LTE.

## Patentansprüche

1. Ein Funkgerät (2), eingerichtet für den Empfang von Signalen von drahtlosen Kommunikationsgeräten (3ₖ), die verschiedene Kommunikationsstandards ausführen, und von einem Kernnetzwerk (6), welches einen ausgewählten Kommunikationsstandard ausführt, wobei besagtes Funkgerät mindestens ein Funkmodul (17) und ein Steuermodul (5) umfasst, wobei besagtes Steuermodul mindestens eine Vorrichtung (1ⱼ) für das Verarbeiten von Signalen umfasst, die von besagtem Funkgerät (2) empfangen werden und die zwischen besagtem Kernnetzwerk (6) und den besagten, drahtlosen Kommunikationsgeräten (3ₖ) auszutauschen sind, wobei besagte Vorrichtung (1ⱼ) so eingerichtet ist, dass sie beim Empfang eines Signals mit einer Trägerbandbreite und einer Abtastrate, die jeweils von einer ausgewählten Trägerbandbreite und einer ausgewählten Abtastrate des besagten, ausgewählten Kommunikationsstandards abweichen, mindestens besagte Trägerbandbreite und besagte Abtastrate des besagten, empfangenen Signals jeweils in die besagte, ausgewählte Trägerbandbreite und in die besagte, ausgewählte Abtastrate umwandelt, um ein modifiziertes Signal zu erzeugen, das entweder an das besagte Kernnetzwerk (6) oder an mindestens ein drahtloses Kommunikationsgerät (3ₖ) zu übermitteln ist.

2. Funkgerät nach Anspruch 1, wobei besagte Vorrichtung ein Verarbeitungsmittel (9ⱼ) umfasst, das eingerichtet ist für das Modifizieren besagter Abtastrate eines empfangenen Signals durch dessen Multiplikation mit einem vordefinierten Faktor in Abhängigkeit mindestens seiner Abtastrate, der besagten, gewählten Abtastrate und der besagten, gewählten Trägerbandbreite.

3. Funkgerät nach Anspruch 2, wobei besagtes Verarbeitungsmittel (9ⱼ) weiterhin eingerichtet ist für das Filtern einiger ausgewählter empfangener Signale, um ihre Impulsform zu verändern.

4. Funkgerät nach einem der Ansprüche 2 und 3, wobei besagtes Verarbeitungsmittel (9ⱼ) dafür eingerichtet ist, um dann, wenn besagtes Funkgerät (2) Nj Signale empfangen hat, welche dieselbe Trägerbandbreite und dieselbe Abtastrate mit ≥ 2 haben, besagte Abtastrate für jedes empfangene Signal durch deren Multiplikation mit dem besagten, vordefinierten Faktor zu modifizieren, der des Weiteren von Nj abhängt.

5. Funkgerät nach Anspruch 4, wobei besagte Vorrichtung umfasst: i) ein Frequenzverschiebungsmittel (10ⱼ), das eingerichtet ist für das Verschieben entsprechender Frequenzen besagter Nj Signale mit jeweils modifizierten Abtastraten, um sie in die besagte, ausgewählte Trägerbandbreite zu verbreiten, und (ii) ein Kombiniermittel (11ⱼ), das eingerichtet ist für das Kombinieren der besagten Nj Signale mit der modifizierten Abtastrate und der Frequenzverschiebung, um ein kombiniertes Signal bereitzustellen, welches die besagte, ausgewählte Trägerbandbreite und die besagte, ausgewählte Abtastrate hat, um es an besagtes Kernnetzwerk (6) zu übermitteln.

6. Funkgerät nach Anspruch 5, wobei besagtes Frequenzverschiebungsmittel (10ⱼ) Nj Digitalsignalgeneratoren (12ⱼₙ) umfasst, jeder von ihnen eingerichtet für das Verschieben besagter Frequenzen eines der Nj Signale mit modifizierter Abtastrate.

7. Funkgerät nach einem der Ansprüche 4 bis 6, wobei besagtes Verarbeitungsmittel (9ⱼ) Nj Abtastratenkonvertiermodule (13ⱼₙ) umfasst, jedes von ihnen eingerichtet für das Modifizieren der besagten Abtastrate eines der besagten, Nj empfangenen Signale durch seine Multiplikation mit einem vordefinierten Faktor.

8. Funkgerät nach einem der Ansprüche 4 bis 6 in Kombination mit Anspruch 3, wobei das besagte Verarbeitungsmittel (9ⱼ) umfasst: i) Nj erste Abtastratenkonvertiermodule (14ⱼₙ), jedes von ihnen eingerichtet für das Modifizieren besagter Abtastrate eines der besagten Nj empfangenen Signale durch ihre Multiplikation mit einem ersten vordefinierten Unterfaktor, der den besagten, vordefinierten Faktor in Kombination mit einem zweiten vordefinierten Unterfaktor definiert, und ii) Nj zweite Abtastratenkonvertiermodule (15ⱼₙ), jedes von ihnen eingerichtet für das Modifizieren besagter Abtastrate eines der besagten, Nj empfangenen Signale, welche gefiltert wurden und deren Abtastrate von einem entsprechenden, ersten Abtastratenkonvertiermodul (14ⱼₙ), modifiziert wurden, durch die Multiplikation besagter Abtastrate mit einem zweiten vordefinierten Unterfaktor.

9. Funkgerät nach einem der Ansprüche 1 bis 8, wobei besagte Vorrichtung eingerichtet ist für das Verarbeiten von Signalen, die auszutauschen sind einerseits zwischen drahtlosen Kommunikationsgeräten (3ₖ), die einen Kommunikationsstandards ausführen, der aus einer Gruppe ausgewählt wurde, die mindestens GSM, WCDMA und WiMax umfasst, und andererseits einem Kernnetzwerk (6) mit einem ausgewählten Kommunikationsstandard, bei dem es sich um LTE handelt.

## Revendications

1. Équipement radio (2) agencé pour recevoir des signaux en provenance d'équipements de communication sans fil (3ₖ) mettant en oeuvre des normes de communication différentes et en provenance d'un réseau coeur (6) mettant en oeuvre une norme de communication choisie, dans lequel il comprend au moins un module radio (17) et un module de commande (5), ledit module de commande comprenant au moins un dispositif (1ⱼ) pour traiter des signaux reçus par ledit équipement radio (2) et devant être échangés entre ledit réseau coeur (6) et lesdits équipements de communication sans fil (3ₖ), ledit dispositif (1ⱼ) étant agencé, lorsqu'il reçoit un signal ayant une largeur de bande de porteuse et une cadence d'échantillonnage différant respectivement d'une largeur de bande de porteuse choisie et d'une cadence d'échantillonnage choisie de ladite norme de communication choisie, pour modifier au moins ladite largeur de bande de porteuse et ladite cadence d'échantillonnage dudit signal reçu respectivement en ladite largeur de bande de porteuse choisie et ladite cadence d'échantillonnage choisie, afin de produire un signal modifié devant être transmis soit audit réseau coeur (6) soit à au moins un équipement de communication sans fil (3ₖ).

2. Équipement radio selon la revendication 1, dans lequel ledit dispositif comprend un moyen de traitement (9ⱼ) agencé pour modifier ladite cadence d'échantillonnage d'un signal reçu en la multipliant par un facteur prédéfini en fonction d'au moins sa cadence d'échantillonnage, ladite cadence d'échantillonnage choisie et ladite largeur de bande de porteuse choisie.

3. Équipement radio selon la revendication 2, dans lequel ledit moyen de traitement (9ⱼ) est en outre agencé pour filtrer certains signaux reçus choisis afin de modifier leur forme d'impulsion.

4. Équipement radio selon l'une des revendications 2 et 3, dans lequel ledit moyen de traitement (9ⱼ) est agencé, lorsque ledit équipement radio (2) a reçu Nj signaux ayant la même largeur de bande de porteuse et la même cadence d'échantillonnage, avec Nj ≥ 2, pour modifier ladite cadence d'échantillonnage de chaque signal reçu en la multipliant par ledit facteur prédéfini, qui dépend en outre de Nj.

5. Équipement radio selon la revendication 4, dans lequel ledit dispositif comprend i) un moyen de décalage de fréquence (10ⱼ) agencé pour décaler des fréquences respectives desdits Nj signaux avec une cadence d'échantillonnage modifiée les unes par rapport aux autres, afin de les répartir dans ladite largeur de bande de porteuse choisie, et ii) un moyen de combinaison (11ⱼ) agencé pour combiner lesdits Nj signaux avec une cadence d'échantillonnage modifiée et un décalage de fréquence afin de fournir un signal combiné, ayant ladite largeur de bande de porteuse choisie et ladite cadence d'échantillonnage choisie, devant être transmis audit réseau coeur (6).

6. Équipement radio selon la revendication 5, dans lequel ledit moyen de décalage de fréquence (10ⱼ) comprend Nj générateurs de signaux numériques (12jₙ), chacun agencé pour décaler lesdites fréquences d'un desdits Nj signaux avec une cadence d'échantillonnage modifiée.

7. Équipement radio selon l'une des revendications 4 à 6, dans lequel ledit moyen de traitement (9ⱼ) comprend Nj modules de rééchantillonnage (13ⱼₙ), chacun agencé pour modifier ladite cadence d'échantillonnage d'un desdits Nj signaux reçus en la multipliant par ledit facteur prédéfini.

8. Équipement radio selon l'une des revendications 4 à 6 en combinaison avec la revendication 3, dans lequel ledit moyen de traitement (9ⱼ) comprend i) Nj premiers modules de rééchantillonnage (14ⱼₙ) chacun agencé pour modifier ladite cadence d'échantillonnage d'un desdits Nj signaux reçus en la multipliant par un premier sous-facteur prédéfini qui définit ledit facteur prédéfini en combinaison avec un second sous-facteur prédéfini, et ii) Nj seconds modules de rééchantillonnage (15ⱼₙ) chacun agencé pour modifier ladite cadence d'échantillonnage d'un desdits Nj signaux reçus, filtrés et ayant une cadence d'échantillonnage modifiée par un premier module de rééchantillonnage correspondant (14ⱼₙ), en la multipliant par ledit second sous-facteur prédéfini.

9. Équipement radio selon l'une des revendications 1 à 8, dans lequel ledit dispositif est agencé pour traiter des signaux devant être échangés entre des équipements de communication sans fil (3ₖ), mettant en oeuvre une norme de communication choisie dans un groupe comprenant au moins GSM, WCDMA et WiMax, et un réseau coeur (6) adapté à une norme de communication choisie qui est LTE.
